# EUROPEAN PATENT SPECIFICATION

(11) **EP 4 262 161 B1**
(45) Date of publication and mention of the grant of the patent: **04.12.2024**
(21) Application number: 23167570.3
(22) Date of filing: 12.04.2023
(51) Int. Cl.: H04L 25/02, H04L 25/49, H04B 10/80

(54) **UNIVERSAL BINARY INPUT MODULE**
UNIVERSELLES BINÄRES EINGABEMODUL
MODULE D'ENTRÉE BINAIRE UNIVERSEL

(30) Priority: 13.04.2022 IN 202241022203
(43) Date of publication of application: 18.10.2023
(73) Proprietor: ABB Schweiz AG, 5400 Baden (CH)
(72) Inventor: Patel, Nishith, 560037 Bangalore (IN); Narendra, Pavan, 560024 Bangalore (IN); Mistry, Samir, 401105 Bhayander (IN); Nykvist, Martin, 65320 Vaasa (FI); de Leeuw, Herman, 7609ED Almelo (NL); Fahner, Geugje, 7602EA Almelo (NL)
(74) Representative: Kolster Oy Ab

(56) References cited:
- US-A1- 2020 089 183
- US-B1- 6 429 637
- US-B1- 8 912 935
- US-B2- 10 862 298

## Description

### FIELD OF THE INVENTION

The present invention generally relates to binary input modules, and particularly to binary input modules for intelligent electric devices, particularly protection relays.

### BACKGROUND OF THE INVENTION

Isolated binary input modules or circuits are widely employed in data acquisition systems in many industrial applications, including protection relays, power-system automation, energy transmission and distribution, high-voltage battery management, telecom power supplies, home automation, programmable logic controller (PLC) digital-input modules, motor control and computer numerical control (CNC) machines.

An electrical binary signal can take two possible states indicated by the voltage level of the signal: signal state "1" indicated by a first discrete voltage level, and signal state "0" indicated by a second discrete signal level. The binary input signal state may represent status of a device or a sensor, such as a status (position) of a switch or relay contact (e.g. open/closed, or ON/OFF). There are various binary AC and DC signal types available in different input voltage ranges, such as the voltage ranges 0-24VDC and 0-230VAC, where 0V is the OFF signal and 24VDC or 230VAC is the ON signal. Usually there is a threshold for detection of the signal state, e.g. for the 0-24VDC binary input signal anything over 22VDC may be detected as the ON signal and anything below 2VDC as the OFF signal. Naturally, threshold settings vary from one voltage range to another.

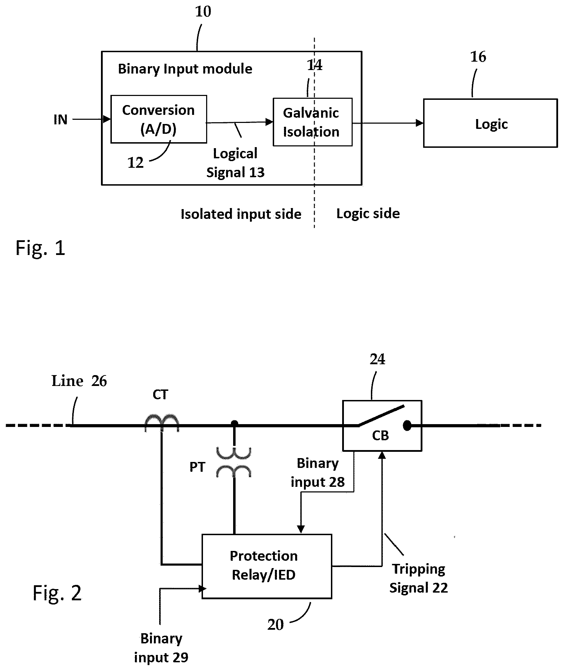

The purpose of a binary input circuit is to receive a binary input signal from an external device or system, such as an industrial sensor on a factory floor, and process the binary input signal so that it can be safely and reliably interpreted by a logic responsible for monitoring the state of binary signal, e.g. the state of the specific device. Isolated binary input modules 10 are used for converting 12 a monitored or measured signal IN coming from a process or field into a logic level signal suitable for further processing in a subsequent 16 logic, as schematically illustrated in Fig.1. Galvanic isolation 14 manages ground-potential differences between the field side and the logic side, improves a noise immunity of the logic side and protects it against high voltages, while allowing the signal transfer. Typically, a binary input senses a change of a monitored state in an external system or equipment based on the magnitude of an external input (AC or DC) voltage with respect to a preset threshold voltage or voltages. A threshold voltage depends on the nominal voltage range of each specific binary signal type. Typically, applications using isolated binary input circuits may operate over a wide range of input AC or DC voltages, such as between approximately 0 and 300 V.

US5672919 and WO2012028211 disclose a low current single channel binary input module with a fixed threshold for providing a binary input signal to a data acquisition system. The binary input module monitors the open/close state of a field contact and provides galvanic isolation of noisy field contacts, high noise immunity, a steady state current, and a momentary high current pulse during field contact closure to aid in cleaning of oxides from the field contact. A disadvantage of a binary input module with a fixed threshold is that it can operate with only one nominal input voltage or a very narrow nominal input voltage range. Consequently, a variety of dedicated isolated binary input modules with dedicated fixed thresholds is needed for supporting the different of input voltage ranges of different applications.

US10371727 discloses a power distribution unit (PDU) including an analog-to-digital converter (ADC) for measuring dynamic signals. The ADC includes a plurality of channels, each channel corresponding to a respective outlet of a plurality of outlets of the PDU. The PDU further includes a microprocessor coupled to the ADC and configured to measure a scale of a signal output from a first channel of the ADC, compare the scale of the signal to a sensitivity threshold, and select, for a first outlet corresponding to the first channel, a reference voltage of a plurality of reference voltages for input to the ADC based on a result of comparing. Such a binary input module with multiple isolated binary input channels requires a complicated circuitry and an additional power supply, which increases cost of the device. A cost-effective solution requires that all electronics of an isolated binary input circuit be powered from the external binary input voltage, which defines strict power budget constrains, because the power consumption exceed the lowest input current available in any of the binary input voltage ranges supported.

EP1052780A2 discloses an integrated circuit with an analog-to-digital converter (ADC) with galvanic isolation. The analog signal to be converted is fed to the ADC via an analog signal path. The ADC, more specifically a sigma-delta converter, generates a 1-bit data stream as digital signal which is passed on to the output of the integrated circuit via a galvanic isolation device connected downstream of the ADC. In the opposite direction, a digital clock signal required by the ADC is fed via the galvanic isolation device to the ADC. This creates two isolated transmission channels, one of which is a data transmission channel and the other is a clock transmission channel. Also US9541604 discloses an isolated input circuit that comprises an analog-to-digital converter (ADC) or a voltage controlled oscillator (VCO) that converts an input analog signal into proportional digital signal. The digital signal is transferred via an isolator block to a control system or processor section. Another isolator block carries the required digital signals like clock from the control system side to the isolated input circuit.

US6525542 discloses a status acquisition apparatus that comprises a conversion circuit which converts an input voltage to a pulse width modulated (PWM) signal. The PWM signal is then passed through an optocoupler to a measurement or comparison circuit which generates a status indication output signal dependent upon the pulse width of the output of the optocoupler. No voltage threshold is needed on the isolated input side. The duty of the pulse width modulated signal decreases as the input voltage is increased to minimize power dissipation over a range of input voltages. Also US10862298 discloses a universal binary input circuit that generates a pulse width modulated (PWM) signal. The PWM signal is transferred via an optocoupler to a subsequent controller. it. No additional power supply is needed to run the binary input circuit because the power is drawn exclusively from the binary input voltage.

US 2020/0089183 A1 pertains to binary input modules interfacing between high DC or AC input voltages and a host microprocessor in what constitutes a programmable logic controller, PLC, system. The binary input module comprises a protective voltage scaler, an ADC and a microcontroller whose serial output is communicated via a galvanic isolation to said host.

It is further known from US 8, 912, 935 B1 to use a self-powered digital input detection circuit for galvanically isolating high input voltages from a monitoring PLC. The input detection circuit converts a high DC or AC binary input voltage into a pulse train whose frequency is proportional to said voltage, drives an optocoupler with the resulting pulses and decodes the optocoupler's output into a digital value.

US 6,429,637 B1 teaches to use, in an AC power meter, a processor having a built-in ADC and communicating with an external device via an optical isolation.

However, there still exists a need for a universal isolated binary input circuit for applications which require strict timing, power budget and cost constraints.

### BRIEF DESCRIPTION OF THE INVENTION

An object of the present invention to provide a novel universal isolated binary input circuit. The objects of the invention are achieved by a universal isolated binary input module and an intelligent electric device according to the independent claims. The preferred embodiments of the invention are disclosed in the dependent claims.

An aspect of the invention is a universal binary input module, comprising:
an input configured to receive a direct current (DC) binary input voltage or an alternating current (AC) binary input voltage, wherein the binary input voltage can take two possible states indicated by a voltage magnitude of the binary input voltage,
an input protection circuit configured to provide overvoltage protection from the binary input voltage,
a rectifier configured to derive a direct current (DC) input voltage from the binary input voltage input,
a power supply circuit configured to use the binary input voltage to power the binary input module,
a converter circuit configured to convert the DC input voltage into a binary output signal,
a galvanic isolator having an input connected to receive said binary output signal and a galvanically isolated output configured to output the binary output signal,
wherein the converter circuit comprises an integrated microcontroller having an inbuilt analog-to-digital converter (ADC), an input port connected to receive the DC input voltage, and a serial output port connected to the input of the galvanic isolator, and wherein
the inbuilt ADC of the integrated microcontroller is configured to convert the DC input voltage at the input port into N-bit digital values presenting the voltage magnitude of the binary input voltage,
the integrated microcontroller is configured to encode the N-bit digital values into a pulse position modulated (PPM) binary data stream, and
the integrated microcontroller is configured to power the galvanic isolator and drive the galvanic isolator with the PPM binary data stream through the serial output port.

In an embodiment of the invention, the integrated microcontroller is configured to partition and encode the N-bit digital value into a plurality of consecutive M-bit symbols in the PPM binary data stream.

In an embodiment of the invention, the input is configured to receive the binary input voltage input with a voltage magnitude between approximately 0 V and 300 V.

In an embodiment of the invention, a quantization step size of the inbuilt ADC is 1V or less, and/or wherein N is an integer equal to 9 or greater.

In an embodiment of the invention, a sampling rate is 800 Hz or higher, and/or a sampling period is 1200 µs or shorter.

In an embodiment of the invention, a total duration of the plurality of M-bit binary PPM symbols is shorter than the sampling period.

In an embodiment of the invention, the integrated microcontroller is configured to enter a power-saving sleep mode after the last one of the plurality of M-bit binary symbols during the sampling period and configured to wake up to an active mode before or in the beginning of the next sampling period.

In an embodiment of the invention, at least the inbuilt ADC and the serial output port are turned off in the sleep mode.

In an embodiment of the invention, an oscillator providing the sampling frequency is turned off in the sleep mode, and wherein the oscillator is preferably an RC oscillator.

In an embodiment of the invention, the integrated microcontroller configured to insert an extra lead bit to precede (N-1) effective bits obtained from the inbuilt ADC to create the N-bit digital value, and to partition and encode the resulting the N-bit digital value into a plurality of consecutive M-bit symbols in the PPM binary data stream.

In an embodiment of the invention, N=12 and M=3, and wherein the integrated microcontroller is configured insert an extra lead bit to precede 11 effective bits obtained from the inbuilt ADC to create the 12-bit digital value, and to partition and encode the resulting 12-bit digital value into four consecutive 3-bit symbols in the PPM binary data stream.

In an embodiment of the invention, the galvanic isolator comprises an optocoupler.

Another aspect of the invention is an intelligent electric device, comprising a control logic and at least one universal binary input module according to embodiments of the invention.

### BRIEF DESCRIPTION OF THE DRAWINGS

In the following the invention will be described in greater detail by means of preferred embodiments with reference to the attached drawings, in which
Figure 1 is a block diagram illustrating an isolated binary input module connected to a control logic;
Figure 2 is a schematic block diagram illustrating an example application of a protection relay;
Figure 3 is a schematic block diagram illustrating an exemplary binary input module and an exemplary control unit with a plurality of binary input modules in an intelligent electric device, IED;
Figures 4A and 4B illustrate examples of encoding 3-bit binary data into a PPM signal;
Figure 5 is a schematic block diagram illustrating a universal isolated binary input module according to exemplary embodiments of the invention; and
Figure 6 is exemplary timing diagram illustrating sending of four 3-bit symbols in PPM data stream.

### DETAILED DESCRIPTION OF EXEMPLARY EMBODIMENTS

Isolated binary input modules according to embodiments of the present invention can be applied in data acquisition systems in many industrial applications, including intelligent electronic devices (IED), protection relays, power-system automation, energy transmission and distribution, high-voltage battery management, telecom power supplies, home automation, programmable logic controller (PLC) digital-input modules, motor control and computer numerical control (CNC) machines.

Protection relays and generally protection IEDs are presented as example application area of binary input modules in the exemplary embodiment illustrated herein, because they have strict timing and power consumption requirements, but the invention is not restricted to protection relays and protection IEDs. In the following the term protection relay is referring to both protection relays and protection IEDs.

Protection relay is a device that protects electrical equipment or system, such as motors, transformers, transmission lines, generators, busbars, etc. Protection relay monitors electrical equipment or system via current and/or voltage inputs to detect and isolate electrical faults before catastrophic damage can occur. If the relay detects a fault or abnormal system condition, it initiates a trip signal to isolate the fault or will signal an alarm to warn operators. There should be a minimal disruption to non-faulted sections of the electrical equipment system when a relay operates. Based on the respective responses to certain types of fault conditions, protection relays are generally classified as overcurrent protection relays, overvoltage protection relays, earth fault protection relays, feeder protection relays, or distant protection relays, as well as other types. Modern digital relays are typically multifunction devices.

In a digital protection relay, commonly referred to as a numerical relay, an analog-to-digital conversion (A/D) of the analog current input(s) and/or the analog voltage input(s) is performed and the further processing of the resulting digital signal(s) is carried out in a digital domain. Digital protection relay is also commonly referred to as a microprocessor-based relay because the digital processing is often implemented by a microprocessor.

An example application of protection relays is schematically illustrated in Figure 2. A protection relay or other IED 20 may be connected to monitor a transmission line 26 for feeder protection by one or more sensors, such as instrument transformers, i.e. current transformers (CT) and/or voltage transformers (VT), that are configured to supply appropriately scaled analog current and/or voltage quantities. In addition to the one or more CT and/or VT inputs, the protection relay or IED 20 may be configured to have one or more binary inputs 28 and 29 to detect and process the positions of circuit breakers, switches, sensors, binary blocking signals, binary starting signals, external resetting signals and so on. The inputted binary signals may be AC or DC signals with wide range of input voltages. Each binary input may require its own binary input module.

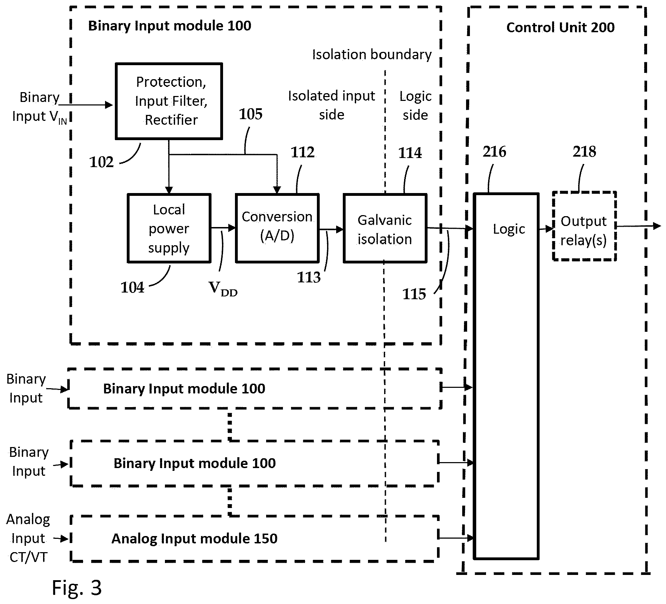

A block diagram of an exemplary binary input module 100 is schematically illustrated in Fig. 3. A binary input signal V_{IN} inputted to the isolated binary input module 100 may be an AC voltage signal or a DC voltage signal having an input voltage range supported by the isolated binary input module 10. The binary input signal can take two possible states indicated by the voltage level of the signal: signal state "1" indicated by a first discrete voltage level, and signal state "0" indicated by a second discrete signal level. The binary input signal can be considered as an analog AC or DC voltage signal whose voltage level is detected or measured by the binary input module 100. The input module 100 may include processing 102 of the binary input signal in an analog form. The analog signal processing 102 may include an overvoltage protector, a full-wave rectifier, smoothing filters, etc., depending on requirements. The processed binary input voltage signal 105, such as a full-wave rectified DC voltage, from the analog processing 102 may then be inputted to a conversion (A/D) block 112 and a local power supply 104. The local power supply 104 may use the binary DC voltage 105 to create a local power, such as a supply voltage V_{DD}, for the conversion (A/D) block 112, and optionally to a galvanic isolation element 14. The conversion (A/D) block 112 is configured to convert (e.g. similar to the (A/D) conversion shown in Fig. 1) the binary input DC voltage 105 into a converted binary (digital) signal 113 that is supplied to the galvanic isolation element 114. The isolation element 114 can be an optocoupler, a transformer, or an integrated isolator, for example. The high level of the converted binary signal 113 on the isolated input side activates the galvanic isolation element 114 to output respective level of a binary signal 115 on the logic side, the converted binary signal being thereby transferred through the isolation boundary to a subsequent logic 216 of a control unit 200 for decision making, such as for making a trip decision in a protection relay. Thus, the binary input module 110 isolates the logic side from possible high voltages and currents of the binary input signal. The control unit 200 refers generally to any processing device or system configured (e.g. programmed) to process the binary input. The logic 216 may analyze the binary signal to determine if action is required under its control, monitoring or protection algorithm(s) or logic equation(s). For example, the logic 216 may be capable of analyzing whether a circuit breaker CB should trip or restrain from tripping based on preset parameter(s), compared against many functions of its analogue input(s), possible relay contact input(s), timing and order of event sequences. If a fault condition or another predetermined trigger condition is detected, a predetermined action is carried out. For example, the logic 216 may send an electrical control signal 16 (the tripping signal) to trip an associated circuit breaker(s) CB to isolate the fault and/or clear an abnormal condition on the equipment or a power system it is protecting, and/or alarm indications may be sent to a system control and/or other protection operations may be initiated. Output signals from the logic 216 may typically be binary output signals, e.g. control (such as tripping signals) and logic signals. An output relay(s) 218 controlled by the binary output signal(s) from the logic 216 (possibly through a galvanic isolation, to provide an actual output signal of a desired output voltage range. There may be a plurality (more than one) of binary inputs and a plurality of isolated binary input modules 100 (also referred to as a plurality of isolated binary input channels herein) for one logic 216 or one control unit 200. Further, there may be one or more analog input modules 150 for analog inputs, such CT or VT inputs.

In some prior art architectures, e.g. those disclosed in US5672919 and WO2012028211, the conversion block is implemented by a comparator circuit that compares the processed binary input voltage 105 with a fixed threshold, a variety of dedicated isolated binary input modules with different fixed thresholds is needed for supporting the wide range of input voltages of different applications.

However, there is need for minimizing the number of variants of isolated binary input modules needed for different applications. A universal isolated binary input module for binary inputs over a wide voltage range would be convenient for configuration and usage perspective. For example, a universal isolated binary input module would preferably support a wide binary input range that is compatible with PLC (Programmable Logic Controller) systems (24Vdc), mains voltage operated logic (120Vac/ 230Vac), battery powered systems (48Vdc /100Vdc), etc. Preferably voltage ranges from about 0V to 300V AC/DC are supported. To allow flexible and reliable monitoring and control operations over a wide range of applications and a wide range of binary input voltages, configurable (programmable) threshold settings, and preferably also hysteresis settings, are required. Tuning of monitoring and control operations requires accurate threshold settings, preferably within accuracy of about 1V or less. Monitoring and control operations may also require strict timing and power budget constraints. In time critical applications, i.e., protection relays, a response time of 3 milliseconds from a fault to action can be required. Specifically, time stamping of events with 1 millisecond of resolution and processing of data within 3 milliseconds may be expected. It is preferrable that a universal isolated binary input module would derive the power for the isolated side from the binary input voltage, thereby eliminating the requirement for a dedicated input power supply to the module on the isolated side. Use of a dedicated input-side power supply (e.g. an isolated DC-DC converter creating an input-side power supply from a logic-side power supply) is not feasible due to cost considerations. Power budget constraints for powering the universal isolated binary input module from a binary input voltage must be set to meet the lowest power (current) available among the supported binary input types. For example, the minimum current produced by 24VDC PLC current-sinking industrial sensors of Type 3 according to the industrial standard IEC61131-2 is 2 mA. Thus, the power budget constraints for the universal isolated binary input module can be specified to be in terms of about 1.6mA - 1.9mA of current.

One approach to achieve a universal isolated binary input could be replacing the fixed threshold with an adjustable threshold in the comparator 114 in the fixed threshold architecture. To adjust the thresholds, the threshold setting must be sent from the logic side through another isolation element to the comparator on the isolated input side. The extra isolation element needed for the control would result in higher cost and in that the power consumption of the isolated binary input module exceeds the power budget available powering the module from the binary input voltage (local power supply 104). Consequently, a dedicated power supply (e.g. an isolated DC-DC converter creating an input-side power supply from a logic-side power supply) is needed for each isolated binary input, which increases cost of the module. Similarly, the binary input module according to US10371727 with multiple isolated binary input channels with dedicated threshold requires a complicated circuitry and an additional isolated power supply, which increases cost of the device.

Another approach to achieve a universal isolated binary input disclosed in US6525542 and US10862298, for example, is to use pulse width modulation (PWM) conversion 112 to convert the input signal level 105 into a PWM signal 115 which transferred through the isolation element 114 to the logic side. The comparison of the signal level with thresholds is carried out by the logic 216. No voltage threshold is needed on the isolated input side. No additional insulated power supply is needed to run the binary input circuit because the power is drawn exclusively from the binary input voltage. However, a duty cycle of the PWM signal is dependent on the input voltage and thereby also the power dissipation varies significantly over a wide range of input voltages. Further, the accuracy and resolution of the PWM modulated signal may be too low for some applications.

One approach to improve the accuracy and resolution would be use of low-cost commercial off-the-shelf analog-to-digital converters (ADC). There are commercial ADCs available that can meet the timing (i.e. sample rate), resolution, and accuracy requirements for an isolated binary input module, and that have power requirements compatible with the power available from input signal voltage. However, commercial ADCs have parallel, or serial output interfaces, like SPI (Serial Peripheral Interface) and I2C (Inter-integrated-circuit) (I2C) interfaces that should be transferred through the isolation boundary. These interfaces would require complex multichannel isolators with a power consumption that would exceed the power budget available, and that, when modulator/demodulator type isolators are used, would not meet the timing requirements.

An aspect of the invention is a cost-effective universal binary input module design using a low power integrated microcontroller with an inbuilt ADC to create a custom ADC with sufficient resolution that can drive a simple single channel isolator (such as an optocoupler) directly and complies with the power budget and timing budget.

According an embodiment of the invention, a converter circuit comprises an integrated microcontroller having an inbuilt analog-to-digital converter (ADC), an input port connected to receive a DC binary input voltage, and a serial output port connected to an input of an optocoupler. The inbuilt ADC of the integrated microcontroller is configured to convert the DC binary input voltage at the input port into N-bit digital values presenting the voltage magnitude of the binary input voltage. The integrated microcontroller is configured to encode the N-bit digital values into a pulse position modulated (PPM) binary data stream. The integrated microcontroller is further configured to drive and power the optocoupler with the PPM binary data stream through the serial output port. The serial data stream is thereby sent over the isolator to the logic side, where the logic is configured to carry out PPM decoding to restore the N bit digital values. Thereby, the voltage magnitudes of the isolated binary input can be compared to programmable thresholds on the logic side.

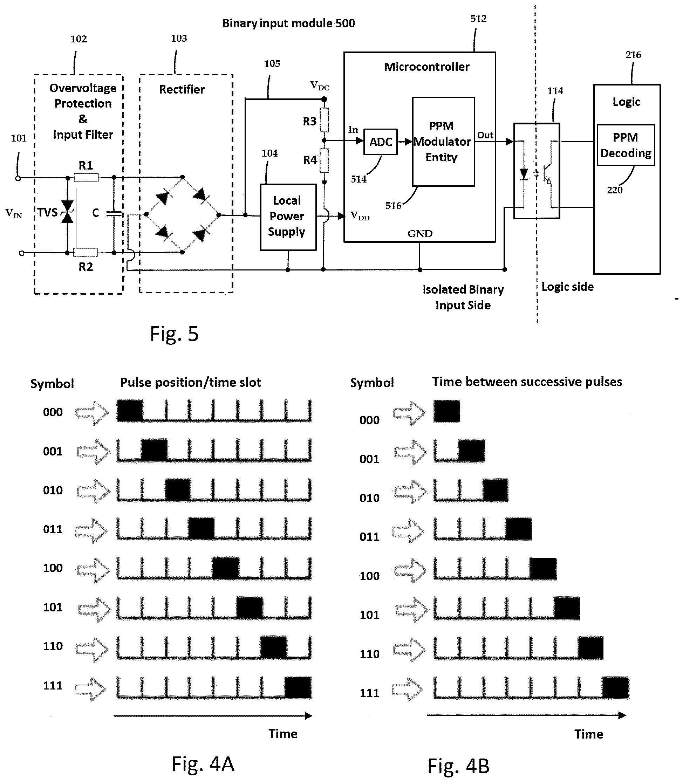

When an optocoupler is used as an isolator, a drive current required by the optocoupler can meet the power budget only if the duty cycle of the serial data stream is low. This means that there should be a minimum number of short pulses per ADC conversion, i.e. per a N bit digital value. On the other hand, the serial data stream must ensure the timing accuracy of the decoding on the logic side. Pulse position modulation (PPM) enables use of one short pulse per a data symbol. In PPM, information is encoded in the pulse position; the pulse position depends on the value represented by the corresponding M-bit input data symbol. For example, 3-bit binary data symbols can have 8 different possible values that can be encoded into 8 different bit positions or time slots in the serial PPM data stream, as illustrated in Fig. 4A. Each 3-bit value can be transferred by one short PPM pulse in the respective pulse position within a symbol time, while other 7 bits positions are empty. PPM is a power efficient modulation technique because a minimum number of "ON" pulses is sent to drive the optical coupler. In a modified version of the PPM, so called differential PPM, or DPPM, each pulse position is encoded relative to the previous transmitted pulse position, i.e. information is encoded in the time difference between two consecutive pulses instead of the position of the time slot within a symbol time. DPPM removes the extra empty pulse positions (zeroes) after the "ON" pulse position of each symbol. This modulation format results in variable-length symbols with a duration less than or equal to the symbol time in the basic PPM, as illustrated in the example of Fig. 4B. Thus in average, comparing to the basic PPM, less time is required to transmit the same information. Another advantage of the DPPM is that the receiver must only measure the difference in the arrival time of successive PPM pulses. By knowing the time difference between two 'on' pulses, a receiver can extract the data.

In order to be able to compare digital values with thresholds in step of 1V or less for a wide input voltage range, such as from 0V to 300V, the size of the quantization steps required for the ADC is 1V or less. This means that, according to an embodiment of the invention, resolution of at least 9 effective bits (512 quantization steps) is needed for having the quantization step size of 1V or less for such wide input voltage range. Most common inbuilt ADCs are 10-bit, 12-bit, and 14-bit ADCs. Thus, in the case a 10-bit or higher resolution inbuilt ADC is employed, 9 or more effective bits available in the ADC can be used. On the other hand, the higher the resolution the higher is the number of bits to be transferred and the transfer time per one converted digital value, so too high resolution may result in exceeding the power and timing constraints.

In an embodiment of the invention, a N bit binary data value may be partitioned into groups of M bits, i.e. M-bit symbols, for PPM encoding. For example, let us assume that the N=12, i.e. the source binary data is 12 bits long. If we choose M=3, the 12-bit binary data value needs to be partitioned into 4 consecutive 3-bit symbols that are encoded (mapped) into PPM bit positions, for example as illustrated in Fig. 4A or Fig. 4B.

In time critical applications, i.e., protection relays, the expected response time, such as 3 milliseconds, shall not be exceeded. The total response time of the isolated binary input module is defined by the cumulative response times (time delays) of the successive stages in the input module (e.g. from the rectifier to the output of the logic). A total duration of M-bit binary PPM symbols required for sending one N-bit binary value shall not exceed a sampling period of an inbuilt ADC. In an embodiment, the inbuilt ADC has a sampling rate of about 800Hz (a sampling period of about 1200 microseconds) or faster to meet the timing budget.

In an embodiment of the invention, a total duration of M-bit binary PPM symbols required for sending one N-bit binary value is shorter than the sampling period. Thereby, a remaining portion of the sampling period after the last one of the M-bit binary symbols can be utilized for a PPM decoding on the logic side, for example.

In an embodiment of the invention, the integrated microcontroller is configured to enter a power-saving sleep mode for a remaining portion of the sampling period after the last one of the M-bit binary symbols and configured to wake up to an active mode before or in the beginning of the next sampling period.

In an embodiment of the invention, the integrated microcontroller is configured to turn off at least the inbuilt DAC and the serial output port in the sleep mode.

In an embodiment of the invention, the integrated microcontroller, when entering the sleep mode, is configured to turn off an oscillator providing the sampling frequency (i.e. the sampling clock). In an embodiment of the invention, the oscillator is an RC oscillator to ensure quick start up. Crystal oscillators do not start up immediately.

There may be a wakeup delay (e.g. about 0,5 milliseconds) present in the transition from the sleep mode to the active mode for the first measurement in the beginning of the next sampling period. The wakeup delay may influence on the accuracy of timing of first PPM symbol pulse in the PPM decoding. In an embodiment of the invention, the integrated microcontroller is configured to insert an extra lead bit (a wakeup bit) to precede (N-1) effective bits obtained from the inbuilt ADC to create the N-bit binary data value, and to partition and encode the resulting the N-bit binary data value into a plurality of consecutive M-bit symbols in the PPM binary data stream. Thus, a first bit position of the first one of the M-bit binary PPM symbols in each sampling period contains a wakeup bit. The wakeup bit will improve the accuracy of timing in the PPM decoding, and particularly compensate any wakeup delay and settling time of the isolated binary input module. In an embodiment of the invention, N=12 and M=3, and the integrated microcontroller is configured insert an extra lead bit (a wakeup bit) to precede 11 effective bits obtained from the inbuilt ADC to create the 12-bit binary data value, and to partition and encode the resulting the 12-bit binary data value into a plurality of consecutive 3-bit symbols in the PPM binary data stream.to partition and encode the 12-bit digital value into four consecutive 3-bit symbols in the PPM binary data stream.

Fig. 5 shows a schematic block diagram illustrating a universal isolated binary input module 500 according to exemplary embodiments of the invention. The universal isolated binary input module 500 may be employed in place of the binary input module 100 illustrated in Figure 3, for example. Same reference numerals refer to the same or corresponding elements and signals in Figures 3 and 5.

A binary input voltage V_{IN} is connected to a two-wire input port 101 of the universal isolated binary input module 500. The binary input voltage V_{IN} may be an AC voltage signal or a DC voltage signal having an input voltage range supported by the isolated binary input module 500. The binary input voltage V_{IN} can be considered as an analog AC or DC voltage whose voltage level is measured by the binary input module 500. The input module 500 may include analog processing of the binary input voltage, such as an overvoltage protection and input filtering 102. In the exemplary embodiment, the overvoltage protection is implemented by a TVS (Transient Voltage Suppressor) diode, and the input filter is implemented by a lowpass filter consisting of resistors R1 and R2, and a capacitor C. The output voltage from the overvoltage protection and input filter circuitry 102 is inputted to a rectifier circuit 103. In the illustrated example, the rectifier 103 is implemented by a full-bridge rectifier that creates a binary DC voltage 105 between (+) terminal and (-) terminal. The binary DC voltage 105 is operationally connected to an input port In of an integrated microcontroller circuit 512. The binary DC voltage 105 may be connected to the input port In of the integrated microcontroller circuit 512 through a voltage step-down or attenuator circuit, such as a voltage divider formed by series connected resistors R3 and R4 illustrated in Figure 5. The binary DC voltage 105 is further connected to a local power supply 104 that provides a supply voltage VDD to power the integrated microcontroller circuit 512.

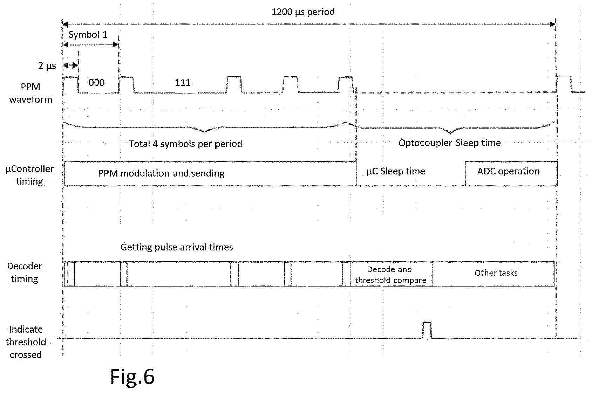

The low power integrated microcontroller 512 includes an inbuilt ADC 514 that is configured to receive the binary DC voltage operationally connected to the input port In. The integrated microcontroller 512 further includes a serial output port Out that is capable to drive and power a simple low-cost single-channel isolator 114, such as the optocoupler illustrated in Figure 5. The output port Out may be a current-sinking port that provides a sink current to the input side of the optocoupler 114 energize emission of a light pulse. The logic side of the optocoupler 114 is powered from a logic-side power source. The inbuilt ADC 514 is configured convert the analog binary DC voltage at the input the input port In into digital values presenting the voltage magnitude of the binary input voltage. In an exemplary embodiment described herein, the inbuilt ADC 514 may be a 12-bit ADC with 11 effective bits being used in the subsequent processing. In an exemplary embodiment described herein, the ADC 514 is clocked by an internal RC oscillator, the sampling frequency being about 800 Hz or higher and the sampling period being about 1200 microseconds or shorter. The integrated microcontroller 512 is further configured to implement a PPM modulator operation 516 by means of firmware and/or software program(s). In an exemplary embodiment described herein, the PPM modulator 516 is configured to configured to add an extra wakeup bit to precede 11 effective bits obtained from the inbuilt ADC 514, thereby producing a 12-bit digital (binary) data value. The PPM modulator 516 is further configured to perform a differential PPM to partition and encode the 12-bit binary data value into four consecutive 3-bit symbols of variable length in the PPM binary data stream. The encoding may be performed as illustrated in the mapping table of Fig. 4B, for example. The integrated microcontroller 512 is further configured to drive and power the optocoupler 114 with the PPM binary data stream through the serial output port Out to send the data stream over the optocoupler 114 to the logic side. An exemplary timing diagram illustrating sending of four 3-bit symbols is shown in Fig. 6. In an exemplary embodiment described herein, the duration (length) of a PPM pulse may be about 2 microseconds. The first pulse in the PPM signal waveform is a wakeup pulse. In an exemplary embodiment described herein, the maximum time available for the PPM modulation operation and sending the four symbols maybe be about 600 microseconds, for example, and a part of the remaining portion of the 1200 microseconds period may be used for the ADC conversion, and the microcontroller 512 may be in a sleep mode during the other part of the remaining portion of the 1200 microseconds period. The output Out of the microcontroller 512 and thereby the optocoupler 114 may be in a sleep mode and turned off for all the remaining portion of the 1200 microseconds period after sending the last pulse.

The PPM decoding performed the logic 216 on the logic side is selected to be compatible with the PPM modulation scheme used in the universal isolated binary input module 500. The threshold comparison, decision making, and possible other functions performed by the logic 216 on the logic side depend on an application which the universal binary input module 500 is used for. The universal binary input module 500 itself has no awareness of the application.

In an embodiment of the invention the serial PPM data stream sent over the optocoupler 114 to the logic side is inputted to the logic 216. The logic 216 comprises a PPM decoding entity 220 that is configured decode the N bit digital values from the received PPM data stream. The PPM decoding entity may include a timer that measures the difference in the arrival time of successive PPM pulses. The time difference between the two 'on' pulses is used to extract the M-bit symbol received. After all PPM pulses of the M-bit symbols have been received and the respective M-bit symbols extracted, the M-bit symbols can be combined to form the original N-bit digital value. The N-bit digital value represents the measured magnitude of the binary input voltage, and the measure voltage can be compared with one or more thresholds. When a crossing of a threshold is detected, a predetermined action is carried out, such as an indication of the crossing may be outputted.

In the exemplary timing diagram shown in Fig. 6, the PPM decoding entity detects a rising edge of the wakeup pulse sent first in the 1200 microsecond sampling period and starts the timer or registers current value of the timer that measures the time to the arrival of the next PPM pulse. The rising edge of each received PPM pulse causes registering the current timer value and resets the timer to measure the time to the arrival of a next PPM pulse. Upon the PPM pulses of all 4 symbols have arrived, the PPM decoding entity starts decoding, possible filtering and threshold comparison. In the case a crossing of a threshold is detected, the PPM decoding entity may submit a signal indicating that indication that threshold is crossed.

In the case of AC binary input voltage, the measured magnitudes of the ADC samples sent to the PPM decoding entity 220 will cross thresholds with the repetition frequency of the AC binary input voltage. In an embodiment of the invention, an AC signal detection filtering may be performed in the case of AC binary input voltages. A number of sampled voltage magnitudes, the exact number of ADC samples is based on division of the sampling frequency and the lowest AC frequency of the binary input voltage, may be searched for highest value, and this value is compared to the threshold. The AC filtering causes a detection time lag equal to the number of samples multiplied by sampling period.

In an embodiment of the invention, an AC rejection filtering may be performed. Particularly for protection relays, there is a requirement to ignore disconnected wires that pick up a mains frequency due to coupling in cable ducts. The disconnected wire is result from the digital input connected to an open contact of a mechanical relay. The AC rejection filtering may filter out the undesired AC component by averaging the AC component over the filter length.

The description and the related figures are only intended to illustrate the principles of the present invention by means of examples. Various alternative embodiments, variations and changes are obvious to a person skilled in the art on the basis of this description. The present invention is not intended to be limited to the examples described herein but the invention may vary within the scope as defined by the appended claims.

## Claims

1. A universal binary input module (10, 100, 500), comprising:
an input configured to receive a direct current (DC) binary input voltage or an alternating current, AC, binary input voltage, wherein the binary input voltage can take two possible states indicated by a voltage magnitude of the binary input voltage,
an input protection circuit (102) configured to provide overvoltage protection from the binary input voltage,
a rectifier (103) configured to derive a direct current, DC, input voltage from the binary input voltage input,
a power supply circuit (104) configured to use the binary input voltage to power the binary input module,
a converter circuit (112) configured to convert the DC input voltage into a binary output signal,
a galvanic isolator (114) having an input connected to receive said binary output signal and a galvanically isolated output configured to output the binary output signal,
wherein the converter circuit comprises an integrated microcontroller (512) having an inbuilt analog-to-digital converter, ADC (514), an input port connected to receive the DC input voltage, and a serial output port connected to the input of the galvanic isolator (114), and wherein
the inbuilt ADC (514) of the integrated microcontroller (512) is configured to convert the DC input voltage at the input port into N-bit digital values presenting the voltage magnitude of the binary input voltage,
the integrated microcontroller (512) is configured to encode (516) the N-bit digital values into a pulse position modulated, PPM2, binary data stream, and
the integrated microcontroller (512) is configured to power the galvanic isolator (114) and drive the galvanic isolator with the PPM binary data stream through the serial output port.

2. The universal binary input module as claimed in claim 1, wherein the integrated microcontroller (512) is configured to partition and encode the N-bit digital value into a plurality of consecutive M-bit symbols in the PPM binary data stream.

3. The universal binary input module as claimed in claim 1 or 2, wherein the input is configured to receive the binary input voltage input with a voltage magnitude between approximately 0 V and 300 V.

4. The universal binary input module as claimed in any one of claims 1-3, wherein a quantization step size of the inbuilt ADC (514) is 1V or less, and/or wherein N is an integer equal to 9 or greater.

5. The universal binary input module as claimed in any one of claims 1-4, wherein a sampling rate is 800 Hz or higher, and/or a sampling period is 1200 µs or shorter.

6. The universal binary input module as claimed in any one of claims 2-5, wherein a total duration of the plurality of M-bit binary PPM symbols is shorter than the sampling period.

7. The universal binary input module as claimed in claim 6, wherein the integrated microcontroller (512) is configured to enter a power-saving sleep mode after the last one of the plurality of M-bit binary symbols during the sampling period and configured to wake up to an active mode before or in the beginning of the next sampling period.

8. The universal binary input module as claimed in claim 7, wherein at least the inbuilt ADC (514) and the serial output port are turned off in the sleep mode.

9. The universal binary input module as claimed in claim 6, 7 or 8, wherein an oscillator providing the sampling frequency is turned off in the sleep mode, and wherein the oscillator is preferably an RC oscillator.

10. The universal binary input module as claimed in any one of claims 2-9, wherein the integrated microcontroller (512) configured to insert an extra lead bit to precede (N-1) effective bits obtained from the inbuilt ADC (514) to create the N-bit digital value, and to partition and encode (516) the resulting the N-bit digital value into a plurality of consecutive M-bit symbols in the PPM binary data stream.

11. The universal binary input module as claimed in in any one of claims 2-10, wherein N=12 and M=3, and wherein the integrated microcontroller (512) is configured insert an extra lead bit to precede 11 effective bits obtained from the inbuilt ADC (514) to create the 12-bit digital value, and to partition and encode (516)the resulting 12-bit digital value into four consecutive 3-bit symbols in the PPM binary data stream.

12. The universal binary input module as claimed in in any one of claims 2-11, wherein the galvanic isolator (114) comprises an optocoupler.

13. An intelligent electric device, comprising a control logic (16, 200, 216) and at least one universal binary input module (10, 100, 500) as claimed in any one of claims 1-12.

14. The intelligent electric device as claimed in claim 13, wherein the intelligent electric device is a protection relay (20).

## Patentansprüche

1. Universelles binäres Eingangsmodul (10, 100, 500), das Folgendes umfasst:
einen Eingang, der konfiguriert ist, eine binäre Eingangsgleichspannung (Eingangs-DC-Spannung) oder eine binäre Eingangswechselspannung, Eingangs-AC-Spannung, zu empfangen, wobei die binäre Eingangsspannung zwei mögliche Zustände annehmen kann, die durch eine Spannungsgröße der binären Eingangsspannung angegeben werden,
eine Eingangsschutzschaltung (102), die konfiguriert ist, einen Überspannungsschutz vor der binären Eingangsspannung bereitzustellen,
einen Gleichrichter (103), der konfiguriert ist, aus der eingegebenen binären Eingangsspannung eine Eingangsgleichspannung, Eingangs-DC-Spannung, abzuleiten,
eine Leistungsversorgungsschaltung (104), die konfiguriert ist, die binäre Eingangsspannung zu verwenden, um das binäre Eingangsmodul mit Leistung zu versorgen,
eine Umsetzerschaltung (112), die konfiguriert ist, die Eingangsgleichspannung in ein binäres Ausgangssignal umzusetzen,
einen galvanischen Isolator (114), der einen Eingang, der angeschlossen ist, um das binäre Ausgangssignal zu empfangen, und einen galvanisch isolierten Ausgang, der konfiguriert ist, das binäre Ausgangssignal auszugeben, aufweist,
wobei die Umsetzerschaltung einen integrierten Mikrocontroller (512) umfasst, der einen eingebauten Analog/Digital-Umsetzer, ADC (514), einen Eingangsanschluss, der angeschlossen ist, um die Eingangsgleichspannung zu empfangen, und einen seriellen Ausgangsanschluss, der mit dem Eingang des galvanischen Isolators (114) verbunden ist, aufweist, und wobei
der eingebaute ADC (514) des integrierten Mikrocontrollers (512) konfiguriert ist, die Eingangsgleichspannung am Eingangsanschluss in digitale N-Bit-Werte umzusetzen, die die Spannungsgröße der binären Eingangsspannung darstellen,
der integrierte Mikrocontroller (512) konfiguriert ist, die digitalen N-Bit-Werte in einen pulspositionsmodulierten, PPM2, binären Datenstrom zu codieren (516), und
der integrierte Mikrocontroller (512) konfiguriert ist, den galvanischen Isolator (114) mit Leistung zu versorgen und den galvanischen Isolator mit dem binären PPM-Datenstrom durch den seriellen Ausgangsanschluss zu steuern.

2. Universelles binäres Eingangsmodul nach Anspruch 1, wobei der integrierte Mikrocontroller (512) konfiguriert ist, den digitalen N-Bit-Wert in mehrere aufeinanderfolgende M-Bit-Symbole in dem binären PPM-Datenstrom zu partitionieren und zu codieren.

3. Universelles binäres Eingangsmodul nach Anspruch 1 oder 2, wobei der Eingang konfiguriert ist, die Eingabe der binären Eingangsspannung mit einer Spannungsgröße zwischen etwa 0 V und 300 V zu empfangen.

4. Universelles binäres Eingangsmodul nach einem der Ansprüche 1-3, wobei eine Quantisierungsschrittgröße des eingebauten ADC (514) 1 V oder kleiner ist und/oder wobei N eine ganze Zahl gleich 9 oder größer ist.

5. Universelles binäres Eingangsmodul nach einem der Ansprüche 1-4, wobei eine Abtastrate 800 Hz oder höher ist und/oder eine Abtastperiode 1200 µs oder kürzer ist.

6. Universelles binäres Eingangsmodul nach einem der Ansprüche 2-5, wobei eine Gesamtdauer der mehreren binären M-Bit-PPM-Symbole kürzer als die Abtastperiode ist.

7. Universelles binäres Eingangsmodul nach Anspruch 6, wobei der integrierte Mikrocontroller (512) konfiguriert ist, während der Abtastperiode nach dem letzten der mehreren binären M-Bit-Symbole in eine leistungssparende Schlafbetriebsart einzutreten, und konfiguriert ist, vor dem oder beim Beginn der nächsten Abtastperiode in eine aktive Betriebsart aufzuwachen.

8. Universelles binäres Eingangsmodul nach Anspruch 7, wobei wenigstens der eingebaute ADC (514) und der serielle Ausgangsanschluss in der Schlafbetriebsart ausgeschaltet sind.

9. Universelles binäres Eingangsmodul nach Anspruch 6, 7 oder 8, wobei ein Oszillator, der die Abtastfrequenz bereitstellt, in der Schlafbetriebsart ausgeschaltet ist, und wobei der Oszillator vorzugsweise ein RC-Oszillator ist.

10. Universelles binäres Eingangsmodul nach einem der Ansprüche 2-9, wobei der integrierte Mikrocontroller (512) konfiguriert ist, ein zusätzliches Führungsbit einzufügen, so dass es den (N - 1) wirksamen Bits vorangeht, die von dem eingebauten ADC (514) erhalten werden, um den digitalen N-Bit-Wert zu erzeugen, und den resultierenden digitalen N-Bit-Wert in mehrere aufeinanderfolgende M-Bit-Symbole in dem binären PPM-Datenstrom zu partitionieren und zu codieren (516).

11. Universelles binäres Eingangsmodul nach einem der Ansprüche 2-10, wobei N = 12 und M = 3 ist und wobei der integrierte Mikrocontroller (512) konfiguriert ist, ein zusätzliches Führungsbit einzufügen, so dass es den 11 wirksamen Bits vorangeht, die von dem eingebauten ADC (514) erhalten werden, um den digitalen 12-Bit-Wert zu erzeugen, und den resultierenden digitalen 12-Bit-Wert in vier aufeinanderfolgende 3-Bit-Symbole in dem binären PPM-Datenstrom zu partitionieren und zu codieren (516).

12. Universelles binäres Eingangsmodul nach einem der Ansprüche 2-11, wobei der galvanische Isolator (114) einen Optokoppler umfasst.

13. Intelligente elektrische Vorrichtung, die eine Steuerlogik (16, 200, 216) und wenigstens ein universelles binäres Eingangsmodul (10, 100, 500) nach einem der Ansprüche 1-12 umfasst.

14. Intelligente elektrische Vorrichtung nach Anspruch 13, wobei die intelligente elektrische Vorrichtung ein Schutzrelais (20) ist.

## Revendications

1. Module (10, 100, 500) d'entrée binaire universel, comportant :
une entrée configurée pour recevoir une tension continue, DC, d'entrée binaire ou une tension alternative, AC, d'entrée binaire, la tension d'entrée binaire pouvant prendre deux états possibles indiqués par une amplitude de tension de la tension d'entrée binaire,
un circuit (102) de protection d'entrée configuré pour assurer une protection contre les surtensions vis-à-vis de la tension d'entrée binaire,
un redresseur (103) configuré pour tirer une tension continue, DC, d'entrée de la tension d'entrée binaire introduite,
un circuit (104) d'alimentation configuré pour utiliser la tension d'entrée binaire afin d'alimenter le module d'entrée binaire,
un circuit convertisseur (112) configuré pour convertir la tension d'entrée DC en un signal de sortie binaire,
un isolateur galvanique (114) doté d'une entrée connectée pour recevoir ledit signal de sortie binaire et d'une sortie galvaniquement isolée configurée pour délivrer le signal de sortie binaire,
le circuit convertisseur comportant un microcontrôleur intégré (512) doté d'un convertisseur analogiquenumérique, ADC, incorporé (514), d'un port d'entrée connecté pour recevoir la tension d'entrée DC, et d'un port de sortie série connecté à l'entrée de l'isolateur galvanique (114), et
l'ADC incorporé (514) du microcontrôleur intégré (512) étant configuré pour convertir la tension d'entrée DC au niveau du port d'entrée en valeurs numériques sur N bits présentant l'amplitude de tension de la tension d'entrée binaire,
le microcontrôleur intégré (512) étant configuré pour coder (516) les valeurs numériques sur N bits en un flux de données binaires modulé en position d'impulsions, PPM2, et
le microcontrôleur intégré (512) étant configuré pour alimenter l'isolateur galvanique (114) et attaquer l'isolateur galvanique avec le flux de données binaires PPM à travers le port de sortie série.

2. Module d'entrée binaire universel selon la revendication 1, le microcontrôleur intégré (512) étant configuré pour partitionner et coder la valeur numérique sur N bits en une pluralité de symboles consécutifs sur M bits dans le flux de données binaires PPM.

3. Module d'entrée binaire universel selon la revendication 1 ou 2, l'entrée étant configurée pour recevoir la tension d'entrée binaire introduite avec une amplitude de tension comprise entre environ 0 V et 300 V.

4. Module d'entrée binaire universel selon l'une quelconque des revendications 1 à 3, une taille de pas de quantification de l'ADC incorporé (514) étant de 1 V ou moins, et/ou N étant un entier supérieur ou égal à 9.

5. Module d'entrée binaire universel selon l'une quelconque des revendications 1 à 4, une fréquence d'échantillonnage étant de 800 Hz ou supérieure, et/ou une période d'échantillonnage étant de 1200 µs ou plus courte.

6. Module d'entrée binaire universel selon l'une quelconque des revendications 2 à 5, une durée totale de la pluralité de symboles PPM binaires sur M bits étant plus courte que la période d'échantillonnage.

7. Module d'entrée binaire universel selon la revendication 6, le microcontrôleur intégré (512) étant configuré pour entrer dans un mode de sommeil économisant l'énergie après le dernier de la pluralité de symboles binaires sur M bits pendant la période d'échantillonnage et configuré pour se réveiller dans un mode actif avant ou au début de la période d'échantillonnage suivante.

8. Module d'entrée binaire universel selon la revendication 7, au moins l'ADC incorporé (514) et le port de sortie série étant éteints dans le mode de sommeil.

9. Module d'entrée binaire universel selon la revendication 6, 7 ou 8, un oscillateur qui fournit la fréquence d'échantillonnage étant éteint dans le mode de sommeil, et l'oscillateur étant de préférence un oscillateur RC.

10. Module d'entrée binaire universel selon l'une quelconque des revendications 2 à 9, le microcontrôleur intégré (512) étant configuré pour insérer un bit antérieur supplémentaire pour précéder (N-1) bits efficaces obtenus à partir de l'ADC incorporé (514) afin de créer la valeur numérique sur N bits, et pour partitionner et coder (516) la valeur numérique sur N bits qui en résulte en une pluralité de symboles consécutifs sur M bits dans le flux de données binaires PPM.

11. Module d'entrée binaire universel selon l'une quelconque des revendications 2 à 10, où N=12 et M=3, et où le microcontrôleur intégré (512) est configuré pour insérer un bit antérieur supplémentaire pour précéder 11 bits efficaces obtenus à partir de l'ADC incorporé (514) afin de créer la valeur numérique sur 12 bits, et pour partitionner et coder (516) la valeur numérique sur 12 bits qui en résulte en quatre symboles consécutifs sur 3 bits dans le flux de données binaires PPM.

12. Module d'entrée binaire universel selon l'une quelconque des revendications 2 à 11, l'isolateur galvanique (114) comportant un optocoupleur.

13. Dispositif électrique intelligent, comportant une logique (16, 200, 216) de commande et au moins un module (10, 100, 500) d'entrée binaire universel selon l'une quelconque des revendications 1 à 12.

14. Dispositif électrique intelligent selon la revendication 13, le dispositif électrique intelligent étant un relais (20) de protection.
